# Europäisches Patentamt
# European Patent Office
# Office européen des brevets

(19)

(11) Veröffentlichungsnummer: **0 023 249**
**B1**

(12) **EUROPÄISCHE PATENTSCHRIFT**

(45) Veröffentlichungstag der Patentschrift:
**22.12.82**

(21) Anmeldenummer: **80102994.3**

(22) Anmeldetag: **29.05.80**

(51) Int. Cl.³: **C 08 F 210/08, C 08 F 210/06**

(54) **Verfahren zur Herstellung von weitgehend amorphen Buten-1-Propen-Ethen-Terpolymeren mit hohem Erweichungspunkt.**

(30) Priorität: **25.07.79 DE 2930108**

(43) Veröffentlichungstag der Anmeldung:
**04.02.81 Patentblatt 81/5**

(45) Bekanntmachung des Hinweises auf die Patenterteilung:
**22.12.82 Patentblatt 82/51**

(84) Benannte Vertragsstaaten:
**AT BE FR GB IT NL**

(56) Entgegenhaltungen:
**DE-A-1 795 483**
**DE-A-2 306 667**
**DE-A-2 757 868**
**FR-A-1 215 308**
**FR-A-1 247 761**

**CHEMICAL ABSTRACTS, Bd. 91, Nr. 2, 9. Juli 1979, S. 19, Zusammenfassung Nr. 5705x, Columbus, Ohio, USA**

(73) Patentinhaber: **CHEMISCHE WERKE HÜLS AG,
Postfach 1320, D-4370 Marl 1 (DE)**

(72) Erfinder: **Dietrich, Johannes, Oderbruchstrasse 8,
D-4370 Marl (DE)**
Erfinder: **Dittmann, Walter, Dr., Uerdinger Strasse 12,
D-4370 Marl (DE)**
Erfinder: **Frese, Albert, Dr., Oppauer Strasse 14,
D-4370 Marl (DE)**
Erfinder: **Kilian, Wolfgang, Dr., Lipper Weg 193,
D-4370 Marl (DE)**

EP 0 023 249 B1

**0 023 249**

Verfahren zur Herstellung von weitgehend amorphen Buten-1-propenethenterpolymeren
mit hohem Erweichungspunkt

Für verschiedene Einsatzgebiete, z.B. für Dach- und sonstige Dichtungsbahnen, für Beschichtungs- und Dichtungsmassen sowie für Verguss- und Klebemassen, werden weitgehend amorphe Polyolefine benötigt.

Aus der DE-AS Nr. 2306667 = GB-PS Nr. 1449316 ist es bekannt, weitgehend amorphe Buten-1-polymere nach dem Niederdruckverfahren durch Polymerisation von Buten-1, ggf. in Gegenwart von 0,1 bis 30 Gew.%, bezogen auf Buten-1, anderer Olefine, in Lösung bei Temperaturen von 40 bis 120° C mit Hilfe eines Mischkontaktes aus $TiCl_3 \cdot n \, AlCl_3$ (n=0,2 bis 0,6) und einem Aluminiumtrialkyl herzustellen. Diese Buten-1-polymeren sind zwar für viele Einsatzgebiete sehr gut geeignet, für einige Einsatzgebiete, wie z.B. Dach- und sonstige Dichtungsbahnen, haben sie einen zu niedrigen Erweichungspunkt von 60 bis 85° C. Für diese Einsatzgebiete benötigt man amorphe Polyolefine mit Erweichungspunkten von 90 bis 130° C. Weitgehend amorphes Polypropylen hat zwar höhere Erweichungspunkte, es ist jedoch bisher nicht möglich gewesen, ein weitgehend amorphes Polypropylen in einfacher und wirtschaftlicher Weise herzustellen. Da neben dem amorphen Polypropylen immer teilkristallines Polypropylen entsteht, das in Kohlenwasserstoffen unlöslich ist, ist eine Polymerisation in Lösung nicht möglich. Man erhält immer eine Suspension von teilkristallinem Polypropylen in einer hochviskosen Lösung des amorphen Polypropylens. Diese hochviskose Lösung und Suspension ist rührtechnisch sehr schlecht zu beherrschen. Ebenso bereitet die Wärmeabfuhr bei der Polymerisation sehr grosse Schwierigkeiten. Auch die Abtrennung des unlöslichen, teilkristallinen Polypropylens von der hochviskosen Lösung ist ein Problem. Co- und Terpolymere des Propens mit hohem Propengehalt haben auch erhöhte Erweichungspunkte, bei ihrer Herstellung treten jedoch die gleichen Schwierigkeiten wie bei der Herstellung von weitgehend amorphem Polypropylen auf. Zudem treten sowohl bei der Herstellung von weitgehend amorphem Polypropylen als auch von Co- und Terpolymeren des Propens mit hohem Propengehalt bei der Polymerisation Anwüchse auf, die das Verfahren sehr erschweren und regelmässige Reinigungen erforderlich machen. Es besteht daher weiterhin ein Bedarf an weitgehend amorphen Olefinpolymeren mit Erweichungspunkten von 90 bis 130° C.

Damit stellt sich die Aufgabe, ein technisch brauchbares Verfahren zur Herstellung von Olefinpolymeren mit Erweichungspunkten von 90 bis 130° C zu schaffen.

Diese Aufgabe wird erfindungsgemäss entsprechend den Angaben des Patentanspruchs gelöst.

Die zu polymerisierenden Olefine, Buten-1, Propen und Ethen sowie das Buten-2 und das Butan sollen weitestgehend frei sein von Verbindungen mit aktivem Wasserstoff, insbesondere von Wasser, Alkoholen und Merkaptanen, Acetylenkohlenwasserstoffen und von mehrfach ungesättigten Kohlenwasserstoffen wie Butadien, insbesondere Butadien-1,2 und Propadien, sowie von Sauerstoff.

Isobuten erniedrigt in grösseren Mengen den Erweichungspunkt und die Polymerisationsgeschwindigkeit. Der Isobutenanteil sollte daher bevorzugt unter 1 Gew.%, bezogen auf Buten-1, liegen.

Buten-1 setzt man in Mengen von 25 bis 76 Gew.%, vorzugsweise von 30 bis 70 Gew.%, insbesondere von 32 bis 40 Gew.% ein, Propen in Mengen von 24 bis 70 Gew.%, vorzugsweise von 30 bis 65 Gew.%, insbesondere von 40 bis 60 Gew.% und Ethen in Mengen von 0,1 bis 20 Gew.%, vorzugsweise 0,2 bis 12 Gew.%, insbesondere von 0,5 bis 10 Gew.%. Überraschenderweise sind die erfindungsgemässen Terpolymere trotz des hohen Propenanteils und der hohen Erweichungspunkte in Kohlenwasserstoffen löslich und daher bei der Lösungspolymerisation ohne Schwierigkeiten herzustellen und ohne Filtration aufzuarbeiten. Die bei der Herstellung von weitgehend amorphem Polypropylen sowie von Co- und Terpolymeren des Propens mit hohem Propengehalt auftretenden Anwüchse bilden sich überraschenderweise bei der Herstellung der erfindungsgemässen Terpolymeren nicht.

Die Polymerisation erfolgt in Lösung, kontinuierlich oder diskontinuierlich. Als Lösemittel dienen das Buten-1 sowie Gemische von Buten-1 mit Buten-2 und/oder Butan. Das Verhältnis von Buten-2 zu Butan kann beliebig sein, vorzugsweise setzt man die bei der Raffinerie anfallende $C_4$-Fraktion ein. In Gemischen, die neben Buten-1 auch Buten-2 enthalten, polymerisiert Buten-2 praktisch nicht. Übliche inerte Verdünnungsmittel, wie gesättigte Kohlenwasserstoffe können eingesetzt werden. Vorzugsweise polymerisiert man jedoch ohne Zusatz von weiteren Verdünnungsmitteln. Als Katalysatorkomponente setzt man ein thermisch instabiles, kristallines, durch Reduktion von $TiCl_4$ mit Aluminium erhaltenes $TiCl_3 \cdot 0,3$ bis $0,35 \, AlCl_3$ ein, das nach den Angaben der DE-PS Nr. 1209297 = GB-PS Nr. 877050 = US-PS Nr. 3769373 zur Polymerisation von Olefinen ungeeignet sein sollte, und nach den Angaben der DE-AS Nr. 1795483 = GB-PS Nr. 821838 und GB-PS Nr. 828791 darüber hinaus zur Herstellung von weitgehend amorphen Olefinpolymerisaten völlig ungeeignet sein sollte. Als Aluminiumtrialkyle bzw. Aluminiumdialkylhydride mit $C_2$- bis $C_4$-Alkylgruppen eignen sich beispielsweise Aluminiumtriethyl, Aluminiumtripropyl, Aluminiumtributyl, Aluminiumdiisobutylhydrid und vorzugsweise Aluminiumtriisobutyl.

Zur Herstellung des Mischkatalysators gibt man beispielsweise das Aluminiumtrialkyl und das thermisch instabile, kristalline $TiCl_3 \cdot 0,3$ bis $0,35$ $AlCl_3$ bei der Polymerisationstemperatur in den Polymerisationsreaktor. Ein vorhergehendes Mischen der Komponenten ist möglich, aber nicht

erforderlich. Das Atomverhältnis Al : Ti im fertigen Katalysator beträgt 0,8 bis 4,0, vorzugsweise 1,5 bis 2,5. Dieser Katalysator hat eine ausgezeichnete Aktivität. Die Polymerisation kann daher schon bei sehr niedrigen Katalysatorkonzentrationen, beispielsweise von 0,01 bis 0,3 mmol $TiCl_3$/l, durchgeführt werden. Zweckmässig setzt man den Katalysator in Mengen von 0,01 bis 1, bevorzugt von 0,03 bis 0,3 mmol $TiCl_3$/l, bezogen auf die gesamte flüssige Phase bei der Polymerisation ein. Grössere Kontaktmengen sind bei Anwesenheit von Verunreinigungen erforderlich. Erfindungsgemäss erreicht man Katalysatorausbeuten von 2500 bis 50 000 Gew.-Teil Buten-1-propenethenterpolymerisat/Gew.-Teil $TiCl_3$ Katalysator.

Das Molekulargewicht regelt man während der Polymerisation in an sich bekannter Weise zweckmässig durch Zusatz von Wasserstoff und/oder durch Temperaturerhöhung im Bereich von 50 bis 100° C.

Die Polymerisation erfolgt bei Temperaturen von 50 bis 100° C, vorzugsweise bei 60 bis 85° C, zweckmässig bei Drücken von 5 bis 20 bar.

Die nach dem erfindungsgemässen Verfahren erhaltenen weitgehend amorphen Buten-1-propenethenterpolymeren sind vollständig in siedendem Heptan löslich und haben etherlösliche Anteile von 60 bis 99%, vorzugsweise von 70 bis 97%, Erweichungspunkte von 90 bis 135° C, vorzugsweise von 100 bis 130° C bei Penetrationswerten von 8 bis 30 $mm^{-1}$, vorzugsweise von 12 bis 25 $mm^{-1}$, Viskositäten von 1000 bis 100 000 mPa·s

bei 190° C und Viskositätszahlen J von 20 bis 150 $cm^3$/g. Überraschenderweise bringt eine Erhöhung des Molekulargewichts (der Viskositätszahlen J) eine grössere Härte, gemessen als Penetration. Es ist ein wesentlicher Vorteil des erfindungsgemässen Verfahrens, dass man in einem äusserst einfachen und wirtschaftlichen Verfahren der Lösungspolymerisation ohne Filtration weitgehend amorphe Buten-1-propenethenterpolymere mit hohen Erweichungspunkten bei frei einstellbarer Penetration im erfindungsgemässen Bereich erhält.

## Beispiel 1

Mit Hilfe eines Mischkontaktes aus 0,003 Gew.-Teilen eines kristallinen, thermisch instabilen $TiCl_3 \cdot 0,33$ $AlCl_3$ (mit Aluminium reduziertes $TiCl_3$ der Titangesellschaft, Typ ATRP) und 0,01 Gew.-Teilen Aluminiumtriisobutyl polymerisiert man 120 Gew.-Teilen eines Gemisches aus 70 Gew.% Buten-1, 29,5 Gew.% Propen und 0,5 Gew.% Ethen bei 90° C und einem Gesamtdruck von 19 bis 15 bar in einem Rührkessel. Nach einer Polymerisationszeit von 4 h stoppt man die Polymerisation durch Zugabe von 0,1 Gew.-Teilen Wasser. In einem Verdampfer verdampft man die nicht umgesetzten Monomeren, lässt die Schmelze des weitgehend amorphen Buten-1-propenethenterpolymeren bei einer Temperatur von 160 bis 200° C ab. Man erhält 110 Gew.-Teile (Umsatz 92%) eines Buten-1-propenethenterpolymeren mit folgenden Eigenschaften:

| | | |
|---|---|---|
| Viskositätszahl J | 52 $cm^3$/g gemessen n. | DIN 53 738 |
| $\overline{M}_v$ | 136 000 | |
| Schmelzviskosität | 40 000 mPa·s/190° C | |
| Heptanlösliche | 100% | DIN 53 738 |
| Anteile | 86% | |
| Etherlösliche Anteile | | |
| Penetration | 11,5 $mm^{-1}$ | DIN 1995 |
| Erweichungspunkt (Ring u. Kugel) | 91° C | DIN 1995 |
| Brechpunkt nach Fraass | −29° C | DIN 1995 |
| Propenanteil | 34 Gew.% | $^{13}$C-NMR-Spektrum |
| Ethenanteil | 1 Gew.% | IR-Spektrum |

## Beispiel 2

In einen druckfesten Rührkessel führt man stündlich 260 Gew.-Teile eines $C_4$-Schnittes, der 52% Buten-1, 40% Buten-2 und 8% Butan enthält, 208 Gew.-Teile Propen und 3,5 Gew.-Teile Ethen, 0,01 Gew.-Teile des in Beispiel 1 eingesetzten kristallinen, thermisch instabilen $TiCl_3 \cdot 0,33$ $AlCl_3$ und 0,035 Gew.-Teile Aluminiumtriisobutyl bei 60° C ein.

Die Polymerisation erfolgt bei einem Wasserstoffpartialdruck von 2 bar bei einem Gesamtdruck von 12 bar. Nach einer durchschnittlichen Verweilzeit von 18 h fährt man die Polymerlösung über ein vom Stand im Polymerisationskessel gesteuertes Absperrorgan in einen Fallstromverdampfer, in den man zusätzlich 0,4 Gew.-Teile/h einer 10%igen wässrigen Ammoniaklösung verdüst. Bei einer Temperatur von 190° C trennt man die nicht umgesetzten Kohlenwasserstoffe mit geringen Mengen niedrigsiedender Oligomeren ab und lässt die Schmelze des weitgehend amorphen Buten-1-propenethenterpolymeren in Formen erkalten. Man erhält stündlich 290 Gew.-Teile eines weitgehend amorphen Olefinpolymeren mit folgenden Eigenschaften:

| | | |
|---|---|---|
| Viskositätszahl J | 35 $cm^3$/g gemessen n. | DIN 53 728 |
| $\overline{M}_v$ | 90 000 | |
| Schmelzviskosität | 10 000 mPa·s/190° C | |
| Heptanlösliche Anteile | 100% | DIN 53 738 |
| Etherlösliche Anteile | 94% | |

| Penetration | 15 mm$^{-1}$ | DIN 1995 |
| Erweichungspunkt (Ring u. Kugel) | 125 bis 130° C | DIN 1995 |
| Brechpunkt nach Fraass | −28 °C | DIN 1995 |
| Propenanteil | 65 Gew.% | $^{13}$C-NMR-Spektrum |
| Ethenanteil | 1,7 Gew.% | IR-Spektrum |

*Beispiele 3 bis 5*

Man verfährt wie in Beispiel 2 beschrieben, jedoch bei einer Reaktionstemperatur von 80° C sowie bei den in der Tabelle angegebenen Wasserstoffpartialdrücken. Dabei werden die in der Tabelle angegebenen Mengen an Monomeren eingefahren und Eigenschaftswerte der Produkte erreicht.

*Tabelle*

| Bsp. | Gew.-Teile Monomere | | | H$_2$-Partial-druck bar | Viskositätszahl J cm³/g | Schmelzviskosität mPa · s bei 190° C | Erweichungspunkt ° C Ring u. Kugel |
|---|---|---|---|---|---|---|---|
| | Ethen | Propen | Buten-1 | | | | |
| 3 | 28 | 215 | 104 | 1,5 | 92 | 90 000 | 112 |
| 4 | 17 | 208 | 121 | 1,6 | 78 | 60 000 | 110 |
| 5 | 35 | 201 | 111 | 1,8 | 69 | 30 000 | 100 |

| Bsp. | Penetration mm$^{-1}$ | Propenanteil Gew.% | Ethenanteil Gew.% | Brechpunkt nach Fraass ° C |
|---|---|---|---|---|
| 3 | 14 | 66 | 10 | −31 |
| 4 | 12 | 64 | 7 | −27 |
| 5 | 20 | 63 | 11 | −33 |

## Patentanspruch

Verfahren zur Herstellung von weitgehend amorphen Buten-1-propenethenterpolymeren mit hohem Erweichungspunkt nach dem Niederdruckverfahren mit Hilfe eines Mischkontaktes aus einem kristallinen durch Reduktion von TiCl$_4$ mit Aluminium erhaltenen TiCl$_3$·0,3 bis 0,35 AlCl$_3$ und einem Aluminiumtrialkyl bzw. Aluminiumdialkylhydrid mit C$_2$- bis C$_4$-Alkylgruppen bei Atomverhältnissen Al : Ti von 0,8 bis 4,0 in Lösung in Buten-1 oder in Gemischen aus Buten-1, Buten-2 und/oder Butan bei Temperaturen von 50 bis 100° C, dadurch gekennzeichnet, dass man 25 bis 76 Gew.% Buten-1 mit 24 bis 70 Gew.% Propen und 0,1 bis 20 Gew.% Ethen polymerisiert.

## Claim

A process for the production of a substantially amorphous butene-1/propene/ethene terpolymer of high softening point by the low-pressure method with the aid of a mixed catalyst comprising a crystalline TiCl$_3$·0.3-0.35 AlCl$_3$ obtained by reduction of TiCl$_4$ with aluminium and an aluminium trialkyl and/or aluminium dialkylhydride in which the alkyl groups have 2 to 4 carbon atoms, the atomic ratio of Al/Ti being from 0.8 to 4.0, the polymerisation being carried out at a temperature of 50 to 100° C in solution in butene-1 or in a mixture of butene-1 with butene-2 and/or butane, characterized in that 25 to 76% by weight of butene-1 is polymerised with 24 to 70% by weight of propene and 0.1 to 20% by weight of ethene.

## Revendication

Procédé de préparation de terpolymères largement amorphes butène-1/propène/éthène présentant un point de ramollissement élevé selon le procédé à basse pression à l'aide d'un catalyseur mixte constitué par un TiCl$_3$·0,3 à 0,35 AlCl$_3$ cristallin obtenu en réduisant TiCl$_4$ avec de l'aluminium et par un aluminium-trialkyle ou un hydrure d'aluminium-dialkyle comportant des groupes alkyle en C$_2$-C$_4$, à des rapports atomiques Al/Ti de 0,8 à 4,0 en solution dans du butène-1 ou dans des mélanges de butène-1, de butène-2 et/ou de butane, à des températures de 50 à 100° C, caractérisé par le fait qu'on polymérise de 25 à 76% en poids de butène-1 avec 24 à 70% en poids de propène et de 0,1 à 20% en poids d'éthène.